# EUROPEAN PATENT APPLICATION

(11) **EP 3 614 242 A1**
(43) Date of publication of application: **26.02.2020**
(21) Application number: 18884261.1
(22) Date of filing: 01.06.2018
(51) Int. Cl.: G06F 3/041

(54) **TOUCH PANEL AND TOUCH DISPLAY DEVICE**

(30) Priority: 30.11.2017 CN 201721643622 U
(71) Applicant: Kunshan Go-Visionox Opto-Electronics Co., Ltd., KunShan City, Jiangsu 215300 (CN)
(72) Inventor: LIN, Shuai, Jiangsu 215300 (CN); ZHANG, Zhihua, Jiangsu 215300 (CN); WANG, Xiangqian, Jiangsu 215300 (CN)
(74) Representative: Kraus & Weisert Patentanwälte PartGmbB
(86) International application number: PCT/CN2018/089546
(87) International publication number: WO 2019/104980

(57) **Abstract**

The disclosure relates to the field of touch technology, and in particular to a touch panel and a touch display device, which are used to improve the problem of touch failure due to the breakage of the metal bridge in the touch panel during use in the prior art. A touch panel includes a number of first touch electrode patterns including a number of first touch units and a connection unit for connecting two adjacent first touch units; a number of second touch electrode patterns insulated from and intersected with the first touch electrode patterns, the second touch electrode pattern including a number of independent second touch units and at least one metal bridge for connecting two adjacent second touch units, wherein the at least one metal bridge has a hollow-out pattern, and two ends of the metal bridge are overlapped on the two adjacent second touch units respectively, thereby improving the durability of the entire touch panel and ensuring the touch performance.

## Description

### CROSS REFERENCE

The disclosure claims the priority of Chinese Patent Application No. 201721643622.1 filed on November 30, 2017, entitled "TOUCH PANEL AND TOUCH DISPLAY DEVICE", the entire contents of which are incorporated in the disclosure by reference herein in their entirety.

### FIELD OF THE DISCLOSURE

The disclosure relates to the field of touch technology, and in particular to a touch panel and a touch display device.

### BACKGROUND

In the prior art, a touch panel, as an input device, is generally used for an electronic terminal such as a mobile phone, a tablet computer, and a touch panel, and for receiving from a user touch operation instructions such as clicking and sliding on the touch panel.

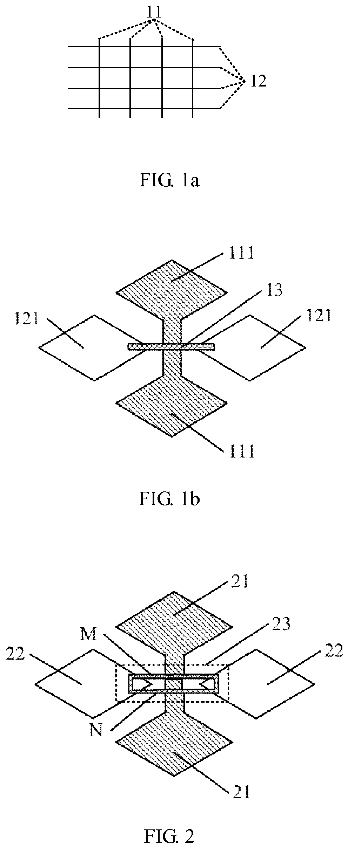

The existing touch panel often includes a first direction electrode 11 and a second direction electrode 12. As shown in FIG. 1a, the first direction and the second direction are perpendicular to each other and located on the same electrically conductive film layer. The enlarged view of the specific structure is shown in FIG. 1b. The first direction electrode and the second direction electrode are often block electrodes, and block electrodes 111 in the first direction electrode are arranged to be connected to each other, and block electrodes 121 in the second direction electrode are arranged to be spaced apart from each other. Also, a metal bridge 13 is generally arranged between the adjacent block electrodes 121 in the second direction electrode so that the first direction electrode 11 and the second direction electrode 12 are mutually insulated and each are turned-on.

In the existing touch panel, the adjacent block electrodes are connected only by the metal bridge. Since the metal bridge is comparatively thin, the metal bridge is prone to breaking during use and causes a broken circuit between the adjacent block electrodes, thereby resulting in poor overall touch performance of the touch screen, and even touch failure.

### SUMMARY

Embodiments of the disclosure provide a touch panel and a touch display device, which aim to improve the problem of touch failure due to the breakage of the metal bridge in the touch panel during use in the prior art.

Embodiments of the disclosure provide the following technical solutions:
a touch panel, comprising: a plurality of first touch electrode patterns arranged along a first direction, the first touch electrode pattern comprising a plurality of first touch units and a connection unit for connecting two adjacent first touch units;
a plurality of second touch electrode patterns arranged along a second direction and insulated from and intersected with the first touch electrode patterns, the second touch electrode pattern comprising a plurality of independent second touch units and at least one metal bridge for connecting two adjacent second touch units, wherein the at least one metal bridge has a hollow-out pattern, and two ends of the metal bridge are overlapped on the two adjacent second touch units respectively.

Preferably, at least two metal bridges are arranged in parallel between the two adjacent second touch units.

Preferably, each metal bridge has a grid pattern.

Preferably, the metal bridge further comprises a plurality of contact portions located at both ends of the metal bridge and for contacting and connecting the second touch units, and a width of the contact portions along a direction perpendicular to an extending direction of the metal bridge is greater than a width of other portions of the metal bridge.

Preferably, the two adjacent second touch units corresponding to any one of the metal bridges each have a concave-convex structure at a spaced channel, and the two second touch units are connected by the metal bridges via the shortest distance.

Preferably, the connection unit of the first touch electrode pattern has a concave-convex structure matching with a concave-convex structure of the second touch electrode pattern.

Preferably, an extending direction of the hollow-out pattern of the at least one metal bridge is arranged along the second direction.

A touch display device is provided, comprising a touch panel according to any one of the above touch panels.

The following beneficial effects can be achieved by at least one technical solution adopted by the embodiments of the disclosure:
In the technical solutions provided by the disclosure, a metal bridge is designed as having a hollow-out structure, and at least two channels for touch signal transmission are formed in the metal bridge. When one of the channels for touch signal transmission is broken, the other channels for touch signal transmission can still perform signal transmission, thereby alleviating the problem of poor touch function and even touch failure after the breakage of the metal bridge in the touch panel in the prior art and improving the durability of the touch panel to some extent. Especially for the flexible touch panel, the structure of the disclosure can further improve the durability of the flexible touch panel, alleviate the influence of the metal bridge breakage on the touch performance during a bending process, and prolong the life of the touch panel. In addition, a plurality of metal bridges arranged between two adjacent touch units can increase touch sensitivity and enhance touch performance of the entire touch panel.

### BRIEF DESCRIPTION OF THE DRAWINGS

FIG. 1a is a schematic structural view of a touch panel in the prior art;
FIG. 1b is an enlarged structural view of a touch panel in the prior art;
FIG. 2 is a first schematic structural view of a touch panel provided by the disclosure;
FIG. 3 is a second schematic structural view of a touch panel provided by the disclosure;
FIG. 4 is a third schematic structural view of a touch panel provided by the disclosure;
FIG. 5 is a fourth schematic structural view of a touch panel provided by the disclosure;
FIG. 6a is a schematic structural view of a touch panel including a triangular concave-convex structure provided by the disclosure;
FIG. 6b is a schematic structural view of a touch panel including a rectangular concave-convex structure provided by the disclosure;
FIG. 7a is a fifth schematic structural view of a touch panel provided by the disclosure;
FIG. 7b is a sixth schematic structural view of a touch panel provided by the disclosure.

### DETAILED DESCRIPTION OF PREFERRED EMBODIMENTS

The technical solutions of the disclosure will be clearly and completely described below in conjunction with the specific embodiments of the disclosure and the corresponding drawings.

### Embodiment 1

With reference to FIG. 2, an embodiment of the disclosure provides a touch panel. The touch panel is used to improve the problem of touch failure due to the breakage of the metal bridge in the touch panel during use in the prior art. The touch panel comprises:
a plurality of first touch electrode patterns arranged along a first direction, the plurality of first touch electrode comprising a plurality of first touch units 21 and a connection unit for connecting two adjacent first touch units 21;
a plurality of second touch electrode patterns arranged along a second direction and insulated from and intersected with the first touch electrode patterns, the second touch electrode pattern comprising a plurality of independent second touch units 22 and at least one metal bridge 23 for connecting two adjacent second touch units 22, wherein the at least one metal bridge 23 has a hollow-out pattern, and two ends of the metal bridge are overlapped on the two adjacent second touch units respectively.

In FIG. 2, the second touch units 22 are connected by the metal bridge 23 having the hollow-out pattern, and the metal bridge 23 is insulated from the first touch electrode pattern. The first touch electrode pattern includes a plurality of first touch units 21 arranged in the first direction, and the two adjacent first touch units 21 are connected and turned on through the connection unit, forming an integrated touch electrode pattern. With this configuration, the two adjacent second touch units 22 in the second direction may be in communication with each other through the metal bridge 23. On the touch panel, the structure of the metal bridge 23 provided by the disclosure may be arranged on every two adjacent second touch units 22 of the second touch electrode pattern. It is possible to make the metal bridge 23 be broken when a user touches the touch panel with a finger. Especially for a flexible touch panel, a breaking point easily occurs in the metal bridge 23 when bent, resulting in poor touch performance and even touch failure.

As for the structure of the metal bridge 23 with the hollow-out pattern provided by the disclosure, with reference to FIG. 2, the metal bridge 23 may be divided into two parts including an upper channel M for touch signal transmission and a lower channel N for touch signal transmission. The channels for touch signal transmission of the two parts may transmit electrical signal. A width of the channel may be similar to a width of the existing metal bridge. The distance between the two channels may be greater than 2 microns and less than 5 microns, or may be adjusted according to actual requirements for production. When the upper channel for touch signal transmission is broken because of touch operation, the channel is unable to continue to perform electrical signal transmission, but the lower channel for touch signal transmission may still perform electrical signal transmission.

As can be seen, in the technical solution provided by the disclosure, a metal bridge is designed as having a hollow-out structure, and at least two channels for touch signal transmission are formed in the metal bridge. When one of the channels for touch signal transmission is broken, the other channels for touch signal transmission may still perform signal transmission, alleviating the problem of poor touch function and even touch failure after the breakage of the metal bridge in the touch panel in the prior art and improving the durability of the touch panel to some extent. Especially for a flexible touch panel, the structure of the disclosure can further improve the durability of the flexible touch panel, alleviate the influence of the metal bridge breakage on the touch performance during a bending process, and prolong the life of the touch panel.

### Embodiment 2

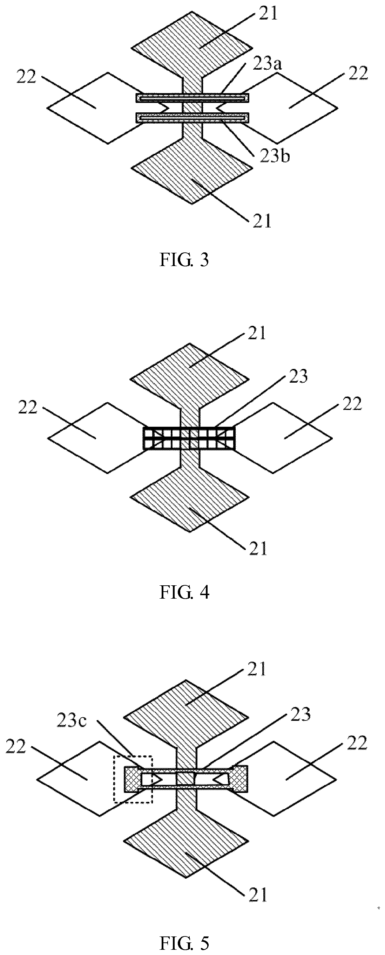

Based on the touch panel provided by the embodiment 1, the disclosure further provides a touch panel structure. With reference to FIG. 3, at least two metal bridges 23 are arranged in parallel between two adjacent second touch units 22.

With the above structure, when one of the metal bridges breaks many times and each channel for touch signal transmission included in the metal bridge is unable to perform electrical signal transmission due to its breakage, the other metal bridges may still perform electrical signal transmission between the two adjacent touch electrodes. For example, the structure in FIG. 3 is broken many times so that the upper metal bridge 23a is unable to perform touch signal transmission. However, since two metal bridges are arranged between the two adjacent second touch units 22 in this embodiment, when the upper metal bridge 23a is completely broken, the lower metal bridge 23b may still continue to perform touch signal transmission. As can be seen, the parallel arrangement of at least two metal bridges between the two adjacent second touch units 22 may further improve the durability of the touch panel.

In addition, when a user performs a touch operation, it is also possible to discharge static electricity to the touch panel through a fingertip so that the metal bridge is damaged by static electricity. In the disclosure, an influence of static electricity on the touch performance may be reduced to some extent by the plurality of metal bridges 23 arranged between the two adjacent second touch units 22. Moreover, in the disclosure, the metal bridge has a hollow-out structure so that the metal bridge has a plurality of channels for touch signal transmission. When the metal bridge is damaged by static electricity, only some transmission channels in the metal bridge may be damaged, and the remaining transmission channels may still perform touch signal transmission. Therefore, the influence of electrostatic damage on the touch performance may be reduced by the structure of the disclosure and the durability of the touch panel may be improved.

Based on the touch panel provided by the above embodiment, each metal bridge 23 of the disclosure has a grid structure. With reference to FIG. 4, when touch signal is transmitted through a metal bridge 23 having a grid shape, there are various touch signal transmission channels, and the touch signal may be transmitted along any one of the transmission channels. When the metal bridge 23 having the grid shape forms breakage at one point, other unbroken grids may still continue to perform signal transmission. Therefore, the durability of the touch panel may be enhance by the structure provided by the disclosure, improving the problem of touch failure due to the breakage of the metal bridge in the touch panel during use.

Based on the touch panel provided in the above embodiment, with reference to FIG. 5, the disclosure further provides a touch panel structure. The metal bridge 23 further includes a contact portion 23c located at both ends of the metal bridge and for contacting and connecting the second touch unit 22, and a width of the contact portion 23c along a direction perpendicular to an extending direction of the metal bridge 23 is greater than a width of other portions of the metal bridge. With this configuration, a contact face between the metal bridge 23 and the second touch unit 22 is relatively larger so that contact resistance between the metal bridge 23 and the second touch unit 22 may be effectively reduced by the larger contact area due to the contact resistance being inversely proportional to the contact area. In the second touch electrode pattern of the touch panel, if the contact face between each metal bridge 23 and the second touch unit 22 has the structure of the embodiment, the overall resistance of the second touch electrode patterns may be effectively reduced and the overall sensitivity of the touch panel may be increased.

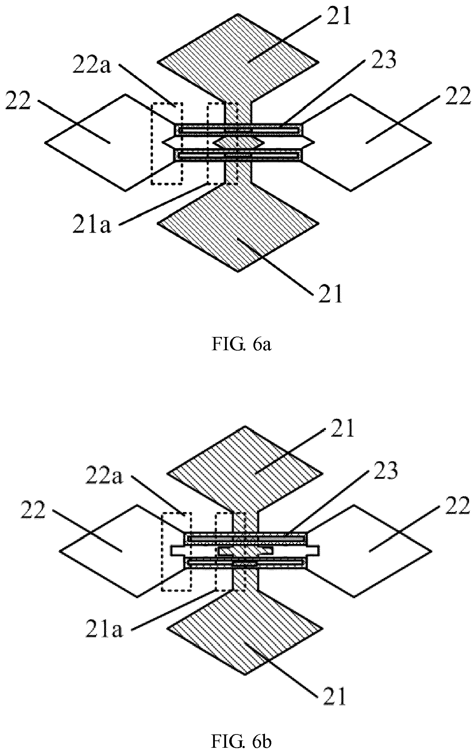

Based on the structure provided by the above embodiment, the disclosure further provides a touch panel. With reference to FIG. 6a and FIG. 6b, the two adjacent second touch units 22 corresponding to any one of the metal bridges 23 each have a concave-convex structure 22a at a spaced channel, and the two second touch units 22 are connected by the metal bridges 23 via the shortest distance.

In FIG. 6a, the concave-convex structure of the second touch unit 22 is triangular, as specifically shown in the curved frame indicated by 22a in FIG. 6a. Similarly, the concave-convex structure may also be rectangular, as shown by the dashed frame indicated by 22a in FIG. 6b. In addition, the concave-convex structure may be other patterns such as a trapezoid, a semicircle, and the like. In the above structure, since the second touch unit 22 has the concave-convex structure 22a and the two adjacent second touch units 22 are connected by the metal bridges 23 via the shortest distance, the length of the metal bridge 23 is relatively short. Since the touch panel is often overlapped with the display panel in the electronic device, shortening the length of the metal bridge 23 in the disclosure may avoid reflecting light of metals present on the touch panel as much as possible, thereby avoiding the influence on the display performance. In addition, a shorter metal bridge is less prone to breaking than a longer metal bridge. Therefore, shortening the length of the metal bridge may further improve the durability of the entire touch panel. Especially for a flexible touch panel, the shorter metal bridge may further improve the ability to resist bending of the touch panel.

Based on the structure provided by the above embodiment, the disclosure further provides a touch panel. With reference to FIG. 6a, the connection unit of the first touch electrode pattern has a concave-convex structure 21a matching with a concave-convex structure 22a of the second touch electrode pattern.

The connection unit in the first touch electrode pattern in FIG. 6a and FIG. 6b is used to perform turn-on touch signal between the two adjacent second touch units 22. When the second touch unit 22 has a concave-convex structure, in order to ensure the turn-on touch signal between the two adjacent second touch units 22 and avoid too narrow width for touch signal transmission, the connection unit of the first touch electrode pattern in the disclosure has a shape matching with the concave-convex structure of the second touch unit, thereby effectively avoiding too narrow channel for touch signal transmission, reducing the overall resistance of the touch panel, and improving the touch sensitivity of the entire touch panel.

Based on the touch panel structure provided by the above embodiment, the disclosure further provides a preferred touch panel, and the extending direction of the hollow-out pattern of the at least one metal bridge is arranged along the second direction.

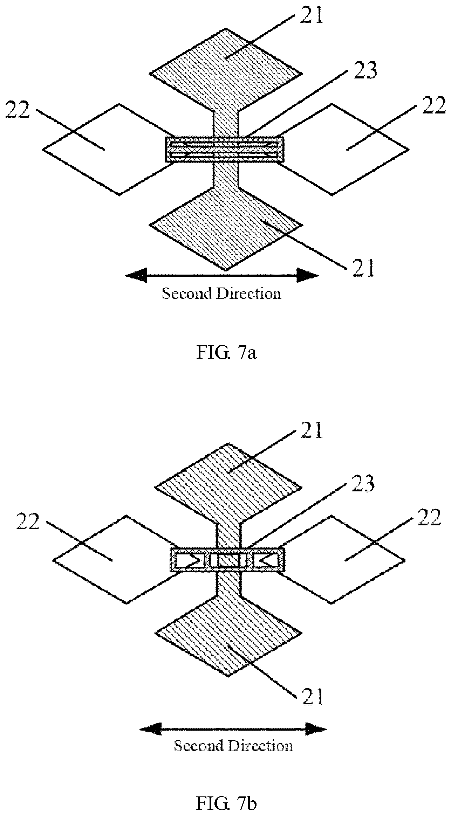

The structural schematic view is shown in FIG. 7a and includes the first touch units 21, the second touch units 22 and the metal bridge 23 arranged between the second touch units 22. The metal bridge 23 has the hollow-out pattern. The hollow-out pattern may specifically be two rectangular patterns. The two rectangular patterns arranged perpendicularly to the second direction on the metal bridge 23 divide the metal bridge 23 into upper, middle and lower transmission lines. When the user performs the touch operation, the metal bridge 23 may be broken, if a first transmission line located above is broken, two transmission lines located in the middle and below may still perform electrical signal transmission between the second touch units 22. Therefore, after broken to some extent, it is more possible for the metal bridge 23 provided by the disclosure to make electrical signal transmission on the touch panel normal, thereby improving the durability of the touch panel and improving the touch failure after the breakage of the touch panel.

Based on the touch panel provided by the above embodiment, with reference to FIG. 7b, the hollow-out pattern of the metal bridge 23 of the touch panel may be arranged along the second direction indicated by an arrow in the figure. In the metal bridge 23 shown in Fig. 7b, electrical signals may be transmitted along a plurality of lines. When the metal bridge 23 is broken at any position, the signals may be transmitted by the metal bridge 23 as a whole, and normal signal transmission between the two adjacent touch units 22 may be ensured. As can be seen, the structure of the metal bridge 23 shown in FIG. 7b may increase the durability of the entire touch panel and improve the problem of touch failure after the touch panel is broken to some extent.

### Embodiment 3

A touch display device includes any one of the touch panels involved in the above embodiments. The touch display device may be applied to an electronic device having the function of touch display. The touch display device provided by the embodiment may alleviate the problem of touch failure due to the breakage of the metal bridge in the touch panel, improve the durability of the entire touch display device, and prolong the service life of the device.

In addition, the display device may be any product or component having the display function, such as a mobile phone, a tablet computer, a television, a display, a notebook computer, a digital photo frame, a navigator, and a smart wearable device. It should be understood by a person skilled in the art that there may be other indispensable components of the display device, which are not described herein, nor should be construed as limited to the application.

The above description is only embodiments of the disclosure and is not intended to limit the disclosure. For a person skilled in the art, the disclosure may have various modifications and changes. Any modification, equivalent replacement, and improvement made within the spirit and principle of the disclosure should fall into the scope of the claims of the disclosure.

## Claims

1. A touch panel comprising:
a plurality of first touch electrode patterns arranged along a first direction, the first touch electrode pattern comprising a plurality of first touch units and a connection unit for connecting two adjacent first touch units;
a plurality of second touch electrode patterns arranged along a second direction and insulated from and intersected with the first touch electrode patterns, the second touch electrode pattern comprising a plurality of independent second touch units and at least one metal bridge for connecting two adjacent second touch units, the at least one metal bridge having a hollow-out pattern, and two ends of the metal bridge being overlapped on the two adjacent second touch units respectively.

2. The touch panel according to claim 1, wherein at least two metal bridges are arranged in parallel between the two adjacent second touch units.

3. The touch panel according to claim 1, wherein each metal bridge has a grid pattern.

4. The touch panel according to claim 1, wherein the metal bridge comprises an upper channel for touch signal transmission and a lower channel for touch signal transmission.

5. The touch panel according to claim 4, wherein the spacing between the upper channel and lower channel is greater than 2 microns and less than 5 microns.

6. The touch panel according to any one of the claims 1-5, wherein the metal bridge further comprises a plurality of contact portions located at both ends of the metal bridge and for contacting and connecting the second touch units, and a width of the contact portions along a direction perpendicular to an extending direction of the metal bridge is greater than a width of other portions of the metal bridge.

7. The touch panel according to any one of the claims 1-5, wherein the two adjacent second touch units corresponding to any one of the metal bridges each have a concave-convex structure at a spaced channel, and the two second touch units are connected by the metal bridges via the shortest distance.

8. The touch panel according to claim 7, wherein the connection unit of the first touch electrode pattern has a concave-convex structure matching with a concave-convex structure of the second touch electrode pattern.

9. The touch panel according to claim 7, wherein the concave-convex structure is triangle, or rectangle, or trapezoid, or semicircle.

10. The touch panel according to any one of the claims 1 to 5, wherein an extending direction of the hollow-out pattern of the at least one metal bridge is arranged along the second direction.

11. The touch panel according to any one of the claims 1 to 5, wherein the hollow-out pattern has two rectangular patterns arranged perpendicularly to the second direction.

12. The touch panel according to any one of the claims 1 to 5, wherein the hollow-out pattern is arranged along the second direction.

13. A touch display device comprises a touch panel according to any one of the claims 1-12.
